(19) Europäisches Patentamt
European Patent Office
Office européen des brevets

(11) **EP 1 906 164 B1**

(12) **EUROPEAN PATENT SPECIFICATION**

(45) Date of publication and mention
of the grant of the patent:
**04.04.2012 Bulletin 2012/14**

(51) Int Cl.:
***G01M 3/32*** *(2006.01)*

(21) Application number: **07253867.1**

(22) Date of filing: **28.09.2007**

(54) **Integrity testing of vials for test sensors**

Unversehrtheitsprüfung von Phiolen für Testsensoren

Test d'intégrité de fioles pour détecteurs de test

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **29.09.2006 US 529863**

(43) Date of publication of application:
**02.04.2008 Bulletin 2008/14**

(73) Proprietor: **Lifescan Scotland Ltd**
**Inverness, IV2 3ED, Scotland (GB)**

(72) Inventors:
• **Macleod, John**
  **Invergordon IV18 0HH (GB)**
• **Tonge, Phill**
  **Nottinghamshire NG13 0FW (GB)**
• **Hardie, Cliff**
  **Naim IV12 5EH (GB)**
• **Jones, Mark**
  **Nottinghamshire NG3 2NJ (GB)**
• **Fishenden, Colin**
  **Nottinghamshire NG12 3ER (GB)**

(74) Representative: **Tunstall, Christopher Stephen**
**Carpmaels & Ransford**
**One Southampton Row**
**London**
**WC1B 5HA (GB)**

(56) References cited:
EP-A1- 0 526 268        WO-A1-99/05496
WO-A1-2006/077050       CH-A5- 685 887
DE-A1- 3 402 940        JP-A- 1 015 626
US-A- 3 399 563         US-A- 5 313 156

## Description

## BACKGROUND OF THE INVENTION

### 1. Field of the Invention

The present invention relates, in general, to vials for test sensors e.g. for diabetes testing, and more particularly to an apparatus and a method of testing the integrity of vials.

### 2. Problem to be Solved

A variety of medical devices employ containers to protect, for example, the medical device from damage prior to use, and/or to maintain sterility of the medical device and/or to isolate the medical device from potentially adverse environmental factors such as humidity and/or ultra-violet (UV) light. Such medical devices include, but are not limited to single-use test sensors (e.g., electrochemical and photometric test sensors, also referred to as "test strips") that are employed with an associated meter for measuring an analyte in a bodily fluid (such as glucose in whole blood). Disposable electrochemical sensors for the measurement and monitoring of target analytes such as glucose concentration, HbA1c, cholesterol, etc in a bodily fluid such as urine, interstitial fluid (ISF), plasma or blood are well known. In particular, the determination of blood glucose concentrations within a sample of whole blood using disposable electrochemical sensors may be an everyday task for people with diabetes. Measurement kits that typically comprise a meter, a plurality of test sensors and a means for lancing the skin, permit routine measurements thereby providing diabetic patients with an increased ability to self-manage the condition.

It is common for one or more single-use test sensors to be stored in a container separate from an associated meter. These containers often have tight fitting lids to isolate the test sensors within the container from the outside environment. Test sensors such as those used in the measurement of blood glucose typically contain a biological enzyme such as glucose oxidase. The performance of the biological enzyme can be damaged by moisture and/or light ingress into the container from the outside environment during storage. Biological enzymes can become degraded over time, particularly with exposure to excess moisture and/or light levels beyond those determined to be acceptable. To maintain the lifetime of individual test sensors and thus their performance and reliability to provide the user with an accurate result, it is important that adequate storage conditions are met.

There are known methods and technologies that may be used to test the integrity of items such as valves, drinks bottles and cans, food and pharmaceutical packaging, blister packs or foil pouches. Example technologies include air pressure decay testing, force monitoring of the lid during closure, acoustic vibration analysis or acoustic analysis of the sound of a lid closing e.g. the 'snap'. An alternative method is a vision recognition and dimensional measurement test system. Such technologies may be used either separately or in combination. However some of these methods may be overly sensitive to the location of a major defect or to variation in the moulds used to manufacture the vials. This may result in vials being 'passed' as having appropriate performance when these vials do not actually meet the performance criteria. The invention disclosed herein involves the utilization of air pressure decay technology and methodology, and the application thereof to integrity testing of containers used to house or store test sensors used by diabetics in the measurement of specific analytes e.g. blood glucose. The method and apparatus described herein is substantially insensitive to both defect location and mould variation.

Air pressure decay testing (also known as air decay or leak testing) is well known and described in the art and is used commercially for medical devices and packaging including blister packs, containers and tubing. Advantages of air pressure decay testing over other methods include consistent and reliable measurements, relatively easy devices to maintain and the technology is built upon robust fundamental laws of physics. The use of positive air pressure decay testing will be primarily described herein, however other air pressure decay testing techniques include, vacuum air decay, dosing leak test systems, and can in some cases involve the use of hydrogen or helium gases.

Many modern industries and in particular the diabetes monitoring industry are presented with the challenge of providing a vial that provides isolation from such environmental factors, while maintaining convenience and easy opening of the vial and facilitating the extraction of a single test sensor. There is therefore a need to provide a method and apparatus for evaluating the performance of a vial in providing such isolation. A further need is to provide fast, cost-effective removal of any substandard vials from a batch of vials. The present invention aims to alleviate at least some of the above-identified problems and/or need.

DE 34 02 940 A1 discloses a process for testing the air-tightness of the wrappings of vacuum packages, each of which comprises a certain quantity of goods packaged air-tight and in vacuum in film, wherein the package to be tested is exposed for a short time immediately after its manufacture to a surrounding gas pressure which exceeds the internal pressure of the package by about 4 to 25 bar and the change of state resulting from the permeability of the film is used as an indicator.

CH 685887 discloses a container leakage testing device which provides a different pressure within the container to the pressure of the outside environment and evaluates the obtained pressure ratio. At least one of the pressures is detected by a pressure sensor, which records a maximum pressure value and compares the measured pressure with this value.

## SUMMARY OF THE INVENTION

The present invention provides an apparatus as recited in the claims.

The present invention applies to vials containing one or more test sensors. If more than one test sensor is present, these may be loose or stacked or otherwise stored within the vial. The invention can also be used if the vial is adapted to dispense test sensors.

## BRIEF DESCRIPTION OF THE DRAWINGS

The novel features of the invention are set forth with particularity in the appended claims. A better understanding of the features and advantages of the present invention will be obtained by reference to the following detailed description that sets forth illustrative embodiments, in which the principles of the invention are utilized, and the accompanying drawings of which:

Figure 1 is a simplified flow diagram of the process steps involved in the manufacture of test sensors including integrity testing of vials according to the present invention;

Figure 2 is a side plan view of an example embodiment of a test strip vial;

Figure 3 is a top plan view of the vial of Figure 2 more clearly showing the shape of cap and tab portion;

Figure 4 is a simplified schematic diagram of an integrity testing apparatus for use in testing the vial of Figure 2, according to the present invention;

Figure 5 is a flow diagram of the general process steps comprising the vial integrity testing apparatus of Figure 4 according to the present invention;

Figure 6 is a close up perspective view of the pick-up and orientation station of Figure 4 showing a vial orientation unit, according to the present invention;

Figure 7 is a simplified perspective view of a vial held in a gripping device and being transferred between stations comprising the integrity testing apparatus of Figure 4, according to the present invention;

Figure 8 is a perspective view of the vial gripping device of Figure 7 with the vials removed to more clearly show the gripping elements;

Figure 9 is a simplified side plan view of a pressure decay test chamber including a vial to be tested therein, shown in the open position;

Figure 10 is a simplified side plan view of the pressure decay test chamber of Figure 9 shown in the closed position;

Figure 11 is a flow diagram outlining the main process steps involved in using pressure decay testing to measure the integrity of vials to house test sensors, according to the present invention;

Figure 12 is an example pressure decay test result chart showing changes in pressure within the pressure decay test chamber over time when tested according to the present invention;

Figure 13 is an example pressure decay test result obtained if a vial contains a major defect;

Figure 14 is an example pressure decay test result chart showing an example of a vial exhibiting a gross leak;

Figure 15 is a schematic view of a sort array station of the pressure decay test apparatus of Figure 4 according to the present invention;

Figure 16 is a flow diagram of the main process steps involved in the operation of the sort array of Figure 15 according to the present invention.

## DETAILED DESCRIPTION OF ILLUSTRATIVE EMBODIMENTS OF THE INVENTION

While preferred embodiments of the present invention have been shown and described herein, it will be apparent to those skilled in the art that such embodiments are provided by way of example only. Numerous variations, changes, and substitutions will now occur to those skilled in the art without departing from the invention.

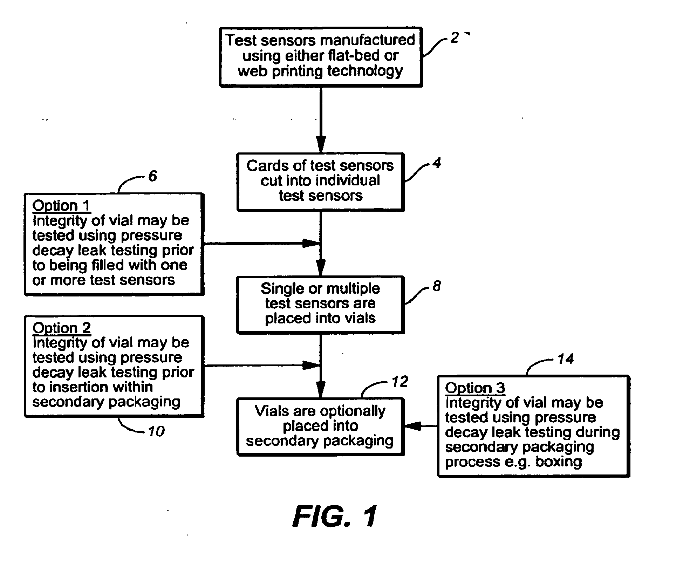

**Figure 1** shows a simplified flow diagram of the process steps involved in the manufacture of test sensors including integrity testing of vials according to the present invention. The process steps include first manufacturing test sensors using known technologies such as flat-bed or continuous web printing, step 2, cutting cards of test sensors into individual test sensors, step 4, placing single or multiple test sensors into a vial step 8, followed by optionally placing the vial into a form of secondary packaging e.g. a cardboard, step 12.

As previously described, it is important that test sensors, such as those used by diabetic patients to monitor their blood glucose levels, be kept within a vial having sound integrity. A vial of sound integrity is taken to be free of cracks, deformations and the like and has a seal which is substantially impermeable to moisture vapor thereby maintaining the performance and hence reliability of the test sensors over a predefined period of time. Vials of test sensors commercially available, such as the OneTouch® Ultra® test sensors available from LifeScan, Inc., Milpitas, USA, may have a shelf life of 18 months for example if the packaging remains unopened. The integrity of the vial is such that any moisture entering into the vial is held by desiccant therein, enabling the test sensors to meet the required performance criteria for this period of time.

The integrity of the vial may be tested at several points during the manufacturing process, including but not limited to: prior to filling the vial with one or more test sensors, step 6; and/or prior to placing the vial into a form of secondary packaging, step 10; and/or at some point during the secondary packaging process, step 14.

During the manufacture of test sensors on a commercial scale, it is possible to include integrity testing of the vial at various stages throughout the procedure. In particular, testing the integrity of batches of vials prior to being filled with product (step 6 in Figure 1) would ensure that only good quality vials are used. Optionally, the integrity of vials manufactured independently could be tested prior to their arrival at the filling plant to detect unreliable components and those with leakage rates that exceed acceptable standards. Alternatively or in addition, vials may be integrity tested following filling with test sensors (step 10). Integrity testing of vials including product allows the detection and subsequent removal of any vials damaged or compromised in some way by the strip filling process employed. Identification of vials at this stage virtually eliminates the possibility of vials with reduced integrity leaving the factory. Furthermore, or optionally in addition, vials containing test sensors could be integrity tested during the secondary packaging process 14.

The integrity of vials can be compromised if for example the vial rim is at all broken or damaged, test sensors become trapped in the lid during closure or if there is an inherent defect in the mould used in the manufacture of the vials. Trapped sensors i.e. one or more test sensors becoming trapped between the lid portion and the base portion of the vial during closure, can account for a large percentage of all faults detected. Ingress of light and/or moisture into a vial that exceeds acceptable standards can degrade the product housed therein, affecting the performance and reliability of test sensors, particularly those that include a biological enzyme. This could potentially result in patients using test sensors that no-longer meet the criteria claimed. It is therefore an aim of the present invention to virtually eliminate this problem.

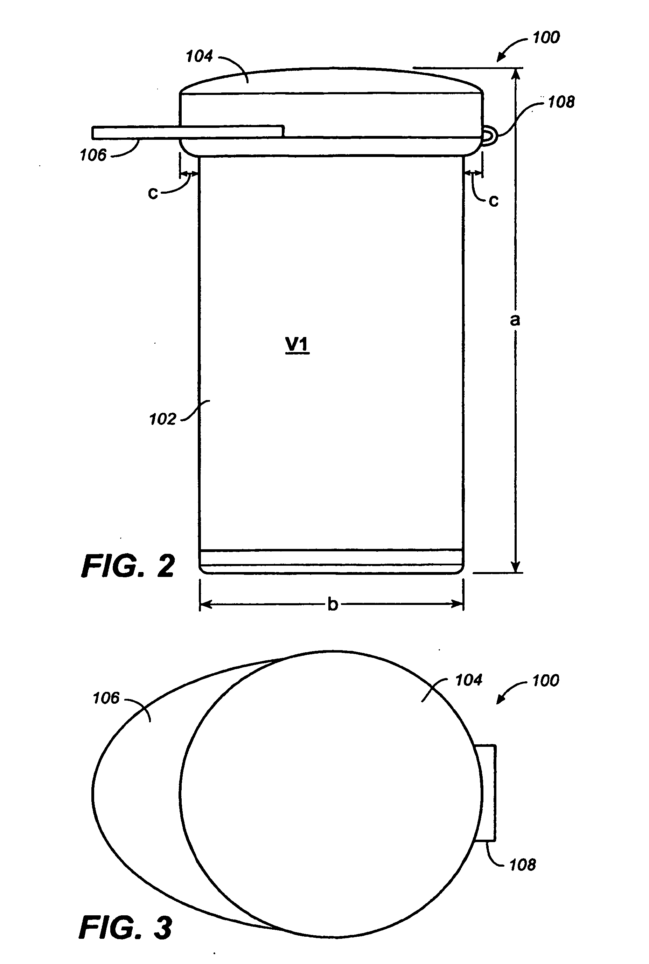

**Figure 2** shows a side plan view of an example embodiment of a vial 100 according to the present invention, including a main body 102, a cap 104 with a tab portion 106, a flexible hinge 108, a height dimension 'a', a width dimension 'b', a cap overhang dimension 'c' and a known internal air volume 'V1'.

**Figure 3** shows a top plan view of vial 100 of Figure 2, more clearly showing the shape of cap 104 and tab portion 106.

Referring now to Figures 2 and 3, vial 100 shown herein is by means of example only and it would be apparent to a person skilled in the art that other sizes and shapes of packaging e.g. containers or cartridges may be used for storing test sensors for use in the measurement of a diabetes analyte or indicator, are conceivable and are intended to be included. Although the term 'vial' is used throughout, it is intended to cover any type of packaging container such as a cartridge or vial for storing either an individual test sensor or a plurality of test sensors, such as those used by diabetic patients to monitor blood glucose concentrations.

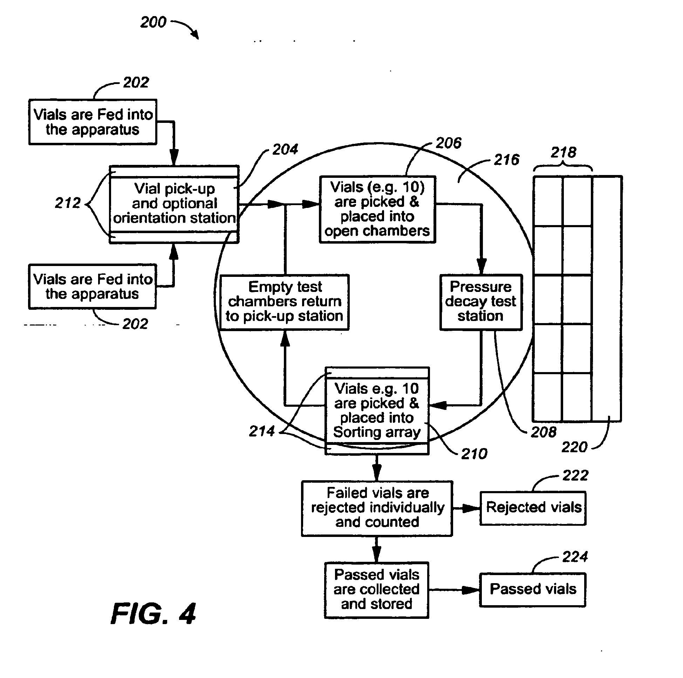

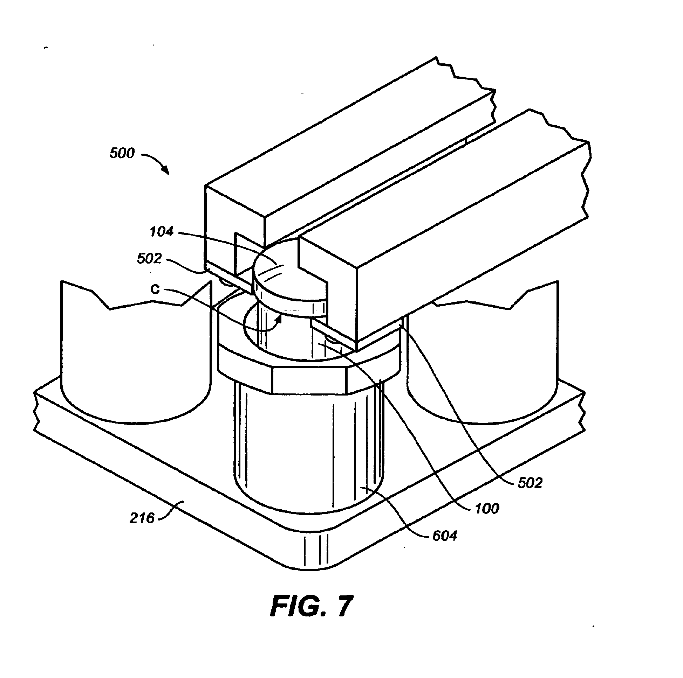

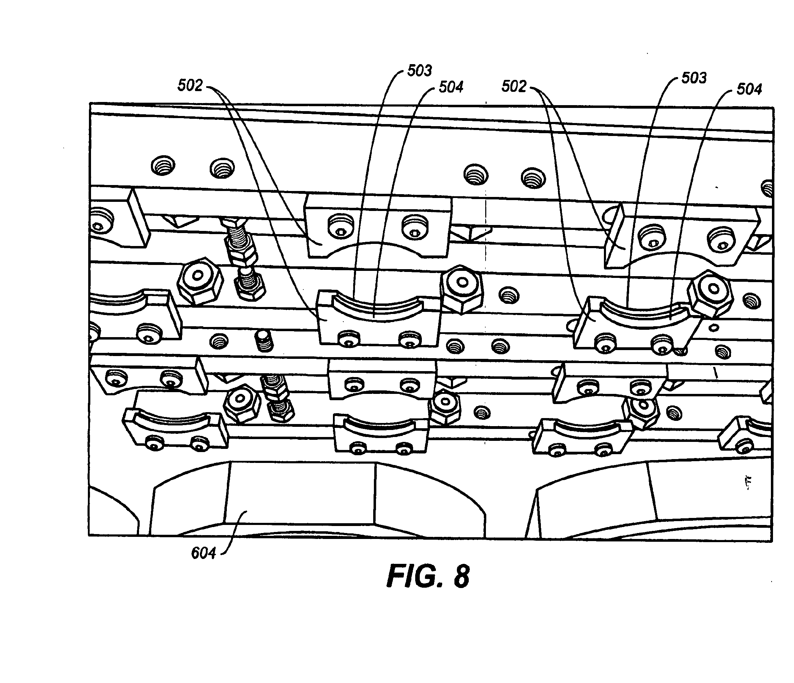

A vial, such as the example embodiment of a vial 100 shown in Figure 2 may be used to house test sensors (typically in the range 1 to 100, e.g. 1, 10, 25, 50 or 100 test sensors) such as those used by diabetics to monitor blood glucose levels. Vial 100 may optionally be molded in a single-piece using a suitable material such as polyethylene, optionally containing desiccant either integrated within the plastic or provided as an additional layer. Vial 100 includes a main body 102 and a cap 104 optionally joined together by a flexible hinge 108. Vial 100 may have a height dimension of approximately 53mm and a width dimension of approximately 25mm. In one embodiment, vial 100 includes a cap overhang dimension 'c' in the range of 2 to 3mm that may be used by the grippers of Figures 7 and 8 to hold each individual vial 100 securely during transfer between subsequent stations that comprise the pressure decay test device described in detail in relation to Figure 4.

Each vial 100 is initially closed upon receipt and is opened prior to filling with a predetermined number of test sensors. Next, vial 100 is re-closed (corresponding to step 8 in Figure 1). Typically an automated apparatus will carry out this procedure.

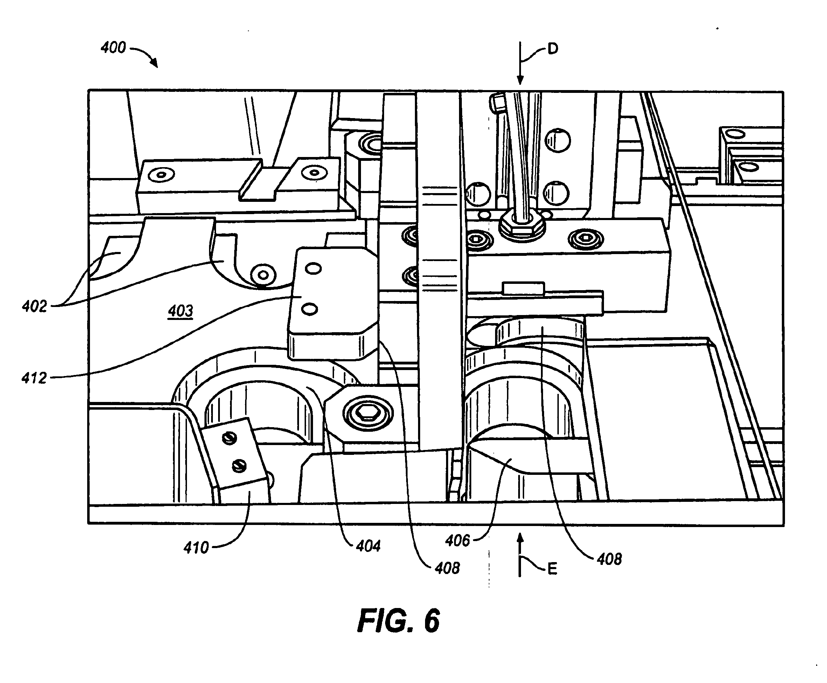

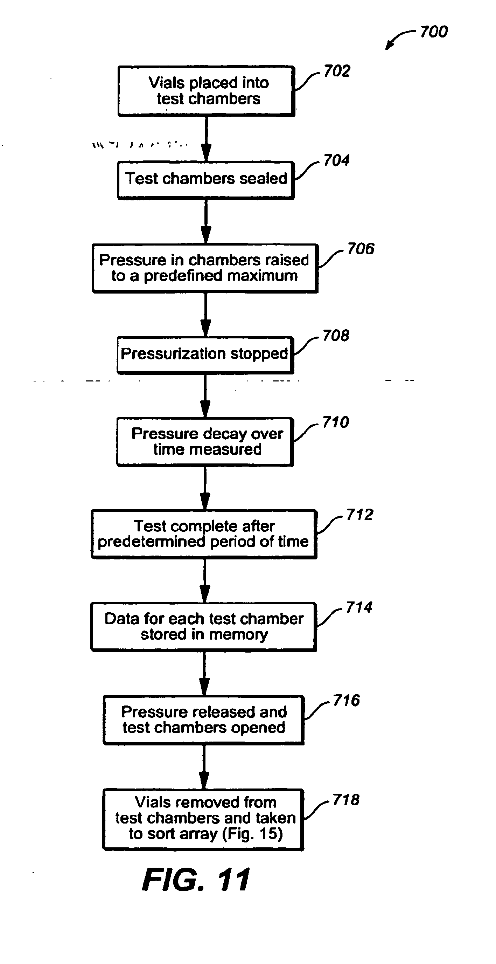

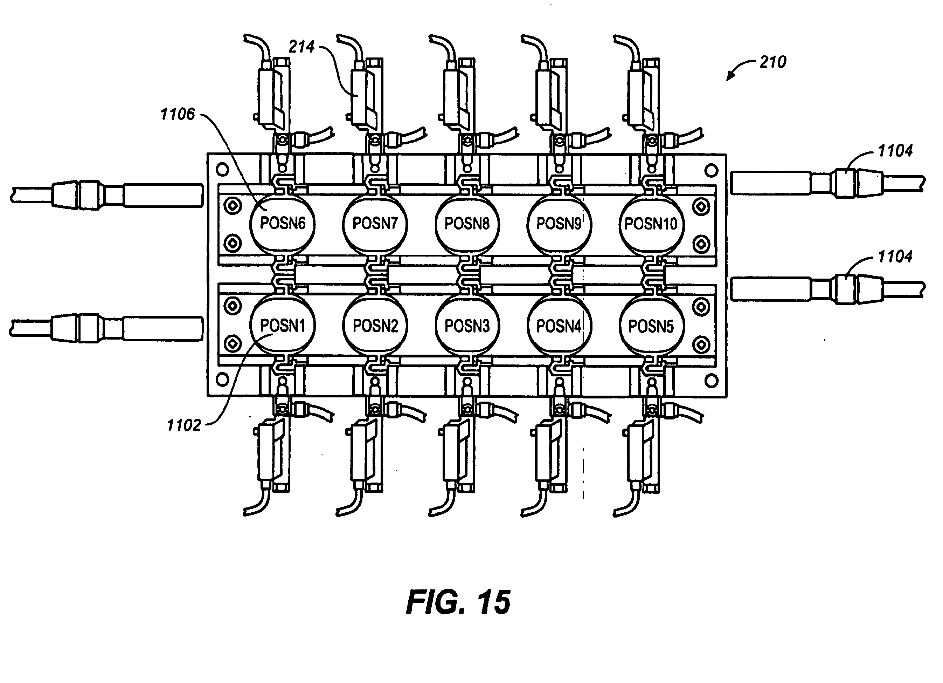

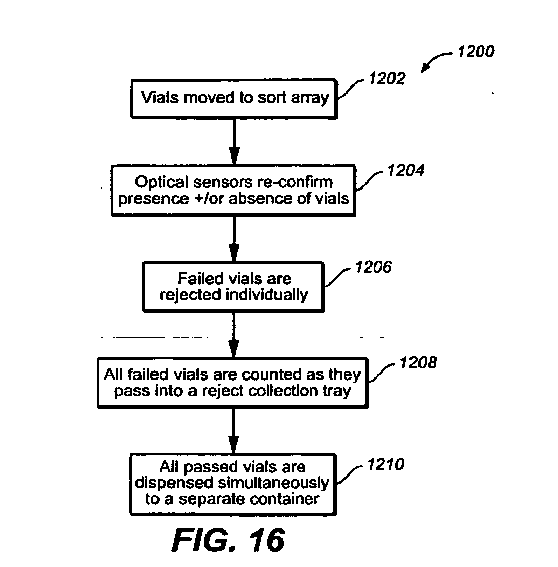

Integrity testing of each individual vial may be accomplished by means of a pressure decay test apparatus 200, such as the example embodiment shown in Figure 4. Pressure decay test apparatus 200 comprises multiple stations, through which vials are transported by means of a rotary table 216 working in conjunction with pneumatic grippers (shown in Figures 7 and 8) that pick and place each group of vials being tested. The grippers are described in detail in relation to Figures 7 and 8. Pick-up and orientation station 204 is described in more detail in relation to Figure 6, pressure decay test station 208 is described in relation to Figure 11 and sorting station 210 is described in relation to Figures 15 and 16. Vials may be tested singly or vials may also be tested in groups. Both options are herein referred to as a sub-batch that forms part of a larger batch of vials. It would be apparent to a person skilled in the art that vials may be tested singularly or in multiples of any predetermined number. For purposes of example, testing of a sub-batch of 10 vials simultaneously will be described herein.

**Figure 4** shows a simplified schematic diagram of a pressure decay test apparatus 200 for testing the integrity of vials such as the example embodiment shown in Figure 2, including one or more vial in-feeds 202, a pick-up station 204 with optional orientation capability, first vial receiving recesses (not shown) at pick-up station 204, a first group of optical proximity sensors 212, a rotary table 216, a group of pressure decay test units 218, a pick-up and placement station 206, second vial receiving recesses (not shown) initially located at pick-up and placement station 206, a pressure decay test station 208, operating electronics 220, a sorting array station 210, third vial receiving recesses (not shown) at sorting array station 210, a second group of optical proximity sensors 214, a collection area for passed vials 224 and a collection area for rejected vials 222.

While it is not strictly necessary it is helpful and provides for simpler electronics and vial tracking if first vial receiving recesses, second vial receiving recesses and third vial receiving recesses are orientated in arrays of similar number and arrangement of recesses.

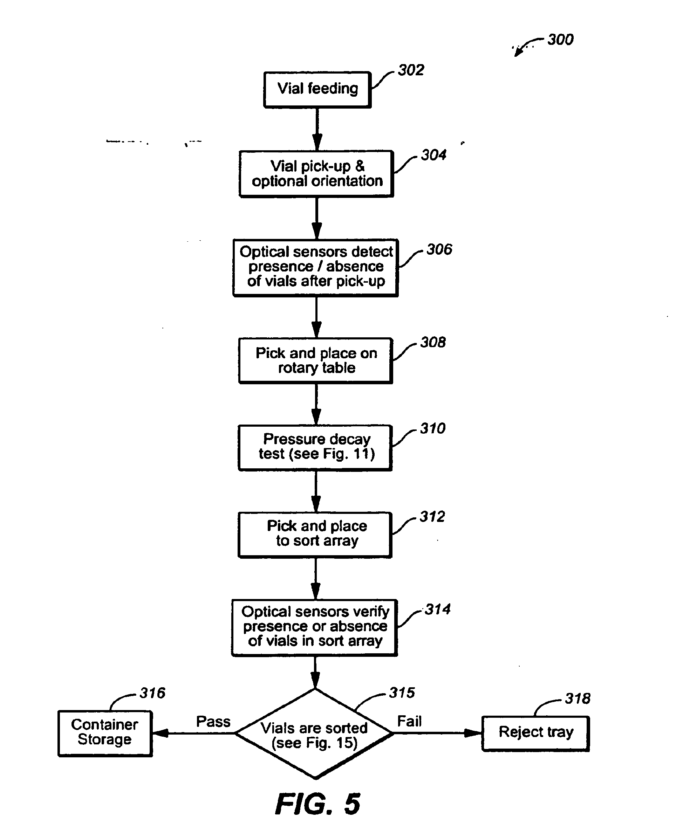

**Figure 5** shows a flow diagram 300 of the general process steps comprising the vial integrity testing apparatus of Figure 4 according to the present invention. The first step is initial vial feeding in which a sub-batch of e.g. up to 10 vials may be picked up, step 302. The next step is pick-up and optional orientation of vials within the sub-batch, step 304. Next, a first group of optical proximity sensors 212 detect the presence or absence of a vial in each of the first vial receiving recesses within the pick-up, step 306. Next, the vials in the sub-batch being tested are picked-up and placed into second vial receiving recesses located on rotary table 216 initially at pick-up and placement station 206, step 308. Next, the rotary table 216 is rotated to bring the second vial receiving recesses to the pressure decay test station 208. Next, the sub-batch of vials then undergoes a pressure decay test, step 310. Electronics 220 receive signals from first optical proximity sensors 212 to indicate which of the first vial receiving recesses contain a vial. Typically only those second vial receiving recesses that contain a vial are subject to pressure decay testing.

Next, the sub-batch of vials tested are picked up and placed into third vial receiving recesses at sorting array station 210, step 312. At sorting array station 210 a second group of optical sensors 214 verify the presence and/or absence of vials within the third vial receiving recesses, step 314. Next, the vials are sorted into 'pass' or 'fail' depending upon whether the pressure decay test was passed or failed by each vial in the sub-batch, step 315. Passed vials are collected in a storage container, step 316, and failed vials are collected in a reject container, step 318.

As described in relation to Figure 1, the integrity of vials may be tested before being filled with test sensors or after test sensors are placed therein, or indeed both. This will ensure that only vials that meet predetermined performance characteristics within the test are filled with test sensors. Optionally, this may enable the subsequent determination if the manufacturing process has in any way compromised the integrity of the vial during the strip filling procedure. Vials 100, such as the example embodiment shown in Figure 2 are typically processed in batches of approximately 30,000 vials. Each batch has an identification parameter that is subsequently used on a label on each vial within the batch. This ensures 100% traceability within the factory and in subsequent handling.

Referring now to Figures 4 and 5 in more detail, vials 100 are fed into the pressure decay apparatus 200, for example, by means of a vibratory bowl-feed or a stepped lift 202, 302, or by some other means. Vials 100 travel on a conveyor and are delivered into a predefined number of first vial receiving recesses within pick-up station 204, step 302. The number of first receiving recesses and subsequently second and third vial receiving recesses are typically equal and make up the number of vials within the sub-batch to be tested e.g. 10 cavities. Optionally, each vial may be correctly orientated at pick-up station 204, step 304 (described in relation to Figure 6). At pick-up station 204 each of first vial-receiving cavities may comprise or be adjacent a vial detection sensor such as an optical proximity sensor 212, such as for example an A3Z series component available from Omron Electronics Ltd., Milton Keynes, UK. For each vial to be accounted for throughout the pressure decay test device 200, the presence and/or absence of each individual vial 100 within each individual first vial-receiving recess is detected, as well as the respective location of the vial within the array of first vial receiving recesses. This information is stored within the memory of device 200 and continuously monitored as each vial 100 passes through the pressure test station 208 and sorting array station 210. The operation of optical proximity sensors is known in the art and will not be described further herein.

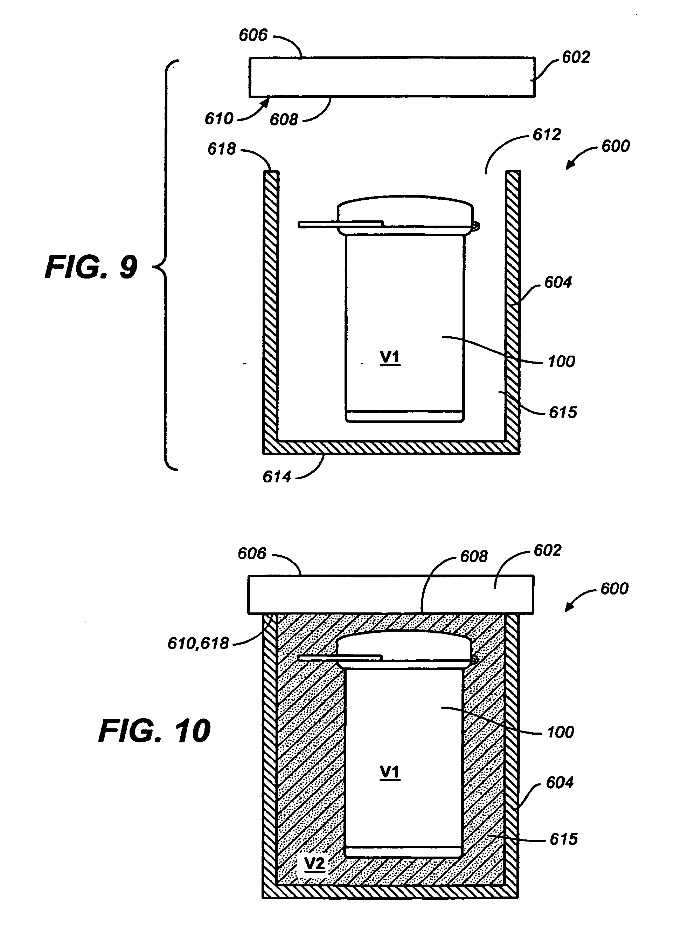

Next, the sub-batch of vials may be picked-up by a carriage (not shown) comprising specifically designed grippers. The grippers are shown and described in relation to Figures 7 and 8. The grippers place the vials into an array of second vial receiving recesses at pick-up and placement station 206 located on rotary table 216 (as shown in Figure 7), step 308. The sub-batch of vials being tested is then transported to the pressure decay test station 208 optionally by rotating rotary table 216 and moving the array of second vial receiving recesses to the pressure decay test station 208. At pressure decay test station 208, an array of lids for second vial receiving recesses may be lowered substantially onto respective second vial receiving recesses (as shown and described in relation to Figures 9 and 10). Next, the pressure decay test takes place on the now closed second receiving recesses, step 310 (described in detail in relation to Figure 11).

Depending on the size and shape of the vial being tested, and the size and shape of the second receiving chamber that functions as the pressure decay test chamber, it may be necessary for each vial to be correctly orientated with respect to the second receiving chamber so that second receiving chamber can accept the vial and proceed with the pressure decay test. Means for orientating vials according to the present invention is shown and described in relation to Figure 6. Optionally, the pressure test chambers may be sized and/or shaped such that the pressure test chambers accept the vials to be tested independent of their orientation, resulting in a simplification of the initial pick-up stage of the device, however the sensitivity of the pressure decay test may be reduced.

On completion of the pressure decay test and release of the pressure, the test chambers re-open. Next, rotary table 216 rotates the array of second receiving chambers containing tested vials around approximately 90° into a position where the vials are again picked-up by a carriage having the grippers of Figures 7 and 8. The vials are placed into third receiving chambers within sorting array station 210, step 312. The presence and/or absence of each vial is again verified by a second group of optical sensors 214 located at sorting array station 210, step 314. The vials 100 within the array of third receiving chambers that have failed the pressure decay test are rejected, optionally individually. Optionally, each rejected vial is counted as it passes into a rejection tray, step 318. The remaining vials that have passed the pressure decay test are simultaneously dropped into a storage collection container, step 316. A more detailed description of the process that takes place at sorting array station 210 is provided in relation to Figures 15 and 16.

Pressure decay test apparatus 200 may be used either as a stand-alone test device or be integrated as an in-line process within a high speed manufacturing line. A modular-type design may be adopted to retain the flexibility of whether the machine operates as stand-alone or in-line, allowing one or more feed unit(s) 202 to be added and/or removed as required.

Figure 6 shows a close up perspective view of the pick-up station 204 of Figure 4 showing an optional vial orientation unit 400 according to the present invention. Arrows 'D' and 'E' depict the direction of vial arrival from in-feeds 202 (shown in Figure 4), a gateway 406, a number of first receiving chambers 402 within an array 403, each first receiving chamber 402 comprising a cam surface 404, an associated optical sensor 410 and an orientation device 412 having an alignment surface 408.

In this particular embodiment, as vials 100 are fed into pick-up station 204 through gateway 406, they are initially orientated to align each vial 100 of the sub-batch in the same direction. Vials may optionally arrive at pick-up station 204 from both sides, indicated by arrows 'D' and 'E'. On arrival, tab portion 106 (see Figure 3) of each vial 100 meets with aligning surface 408, and in conjunction with cam surface 404 of the respective vial-receiving cavity 402 ensures the correct and consistent alignment of each vial 100 in the sub-batch undergoing measurement.

In one example embodiment it is desirable for all vials to be aligned in order for the carriage comprising grippers (described in relation to Figures 7 and 8) to grip successfully each vial 100 and lift them into second receiving chambers which serve as pressure chambers. In addition, consistent alignment allows the pressure chambers to be shaped to fit neatly the vials 100 being tested. This is because an excessive amount of air around the item being tested can reduce the sensitivity of the test method as will be described in relation to Figure 10.

In another embodiment of the present invention it may not be necessary to orientate each vial as the method of transporting the vials through the pressure decay test apparatus 200 may be unaffected by the alignment of each vial, and each pressure chamber may be sized and/or shaped to accept a vial irrespective of shape and/or orientation.

Figure 7 is a perspective view of a vial gripping device 500 according to the present invention. Figure 7 shows opposing gripping elements 502, a vial 100, a vial cap 104, a cap overhang region 'c', a second receiving chamber 604 and a rotary table 216.

Figure 8 is a perspective view of the vial gripping device 500 of Figure 7 viewed from below, with vials 100 removed to more clearly show opposing gripping elements 502 including lips 503 and recessed surfaces 504. In the example embodiment shown, lips 503 are curved to match the curvature of region 'c' of vial cap 104.

Referring now to the example embodiment of Figures 7 and 8, transfer of vials 100 out of the array of first receiving chambers at pick-up station 204 and into the array of second receiving chambers at pick-up and placement station 206 is carried out by means of specifically designed gripping elements 502. Gripping elements 502 are specifically designed to grip each individual vial 100 by utilizing the cap overhang region 'c' situated directly beneath vial cap 104 as shown in Figure 2. Lips 503 of gripping elements 502 engage with vial 100 at cap overhang region 'c' providing a reliable and secure hold of each vial 100 as it is transferred within pressure decay test apparatus 200. Lips 503 of gripping elements 502 are shaped i.e. curved to conform to the external surface of the vial 100 to provide a reliable hold of vials 100 as they are either lifted into, or out of second receiving chambers 604 on rotary table 216.

Recessed surfaces 504 located directly beneath lip 503 of gripping elements 502 are designed specifically to prevent any damage to a label applied to the external surface of vial 100 prior to pressure decay testing within pressure decay test apparatus 200.

In one embodiment, gripping elements 502 are pneumatically operated, however it would be apparent to a person skilled in the art that alternative means of gripping vials 100 are possible and are intended to be included, such as the use of vacuum suction for example that may be used alone or in combination with another method.

Once located in second receiving chambers 604, the sub-batch of vials being tested may be driven to the pressure test station 208 via rotary table 216. Following testing, the vials may again be transferred out of second receiving chambers 604 by means of pneumatic gripping elements 502 and into the array of third receiving chambers at sorting array station 210 to allow subsequent sorting and ejection from the pressure decay test apparatus 200.

Figure 9 shows a cross-sectional elevation view of an example second receiving chamber which serves as a pressure decay test chamber 600, shown in an open position. A vial 100 to be tested is shown located within chamber 600, comprising a lid portion 602 with a top side 606 and a bottom side 608, a lid sealing surface 610 on said bottom side 608, a base portion 604 with a proximal end 612, a distal end 614, a vial-receiving cavity 615 and a sealing counter-face 618 at proximal end 612 of base portion 604.

Figure 10 shows a simplified cross-section elevation view of the pressure decay test chamber 600 of Figure 9 shown now in the closed position, including all the same features as described in relation to Figure 9 and further including an interstitial volume 'V2'.

Referring now to Figures 9 and 10, the example pressure test chamber 600 shown comprises two main components, a lid portion 602 and a base portion 604. To ensure an adequate seal there-between under pressurized conditions, it is typical that both lid portion 602 and base portion 604 be made of a metal (such as stainless steel for example) thereby creating a metal against metal seal to prevent any movement of the chamber lid and base portions (602, 604) with respect to each other during the test. Any such movement may change the volume held therein and hence the pressure within the test chamber. Lid sealing surface 610 abuts directly against sealing counter-face 618 of base portion 604, or may optionally involve a rubber sealing element such as an 'O'-ring or engagement features such as a lip and corresponding groove for example. It would be apparent to a person skilled in the art that different types of seal are conceivable and are intended to be included.

Base portion 604 includes a cavity 615 into which a single vial 100 to be tested is placed. In this embodiment, cavity 615 is size and shaped to hold vial 100 neatly in place. On initiation of the pressure decay test, lid portion 602 is moved towards base portion 604 and held down (or vice versa) to form an airtight seal. When in the closed position (Figure 10), the air volume immediately surrounding vial 100 consists of an interstitial volume 'V2'. It is into this interstitial volume 'V2' that air (optionally treated to remove excess moisture and particulates) is pressurized in order to perform the pressure decay test of the present invention.

Although the example embodiment of a pressure decay test chamber 600 shown in Figures 9 and 10 is cylindrical in shape, it would be apparent to a person skilled in the art that any shape and size of pressure decay chamber is conceivable and is intended to be included.

**Figure 11** shows a flow diagram 700 outlining the main process steps involved in using a pressure decay testing apparatus to measure the integrity of vials used to store and protect test sensors such as those used for blood glucose testing. Firstly, vials are placed into pressure testing chambers, step 702, which are then closed and sealed, step 704. Pressure test chambers are then charged with pressurized air to raise the pressure in the test chamber to a predetermined maximum pressure, step 706. Next, the pressurization is stopped, step 708. Next, changes in air pressure for each test chamber are measured over a predetermined period of time, step 710, after which, in this example embodiment, the pressure decay test is complete, step 712. Data for each test chamber may optionally be stored in the memory of the apparatus, step 714 and/or optionally transferred to a remote server, PC or workstation. Pressure is subsequently released and the test chambers re-open, step 716, allowing the tested vials to be removed from the pressure decay test station, step 718.

Optical sensors 212 located at each first receiving chamber within the array at pick-up station 204 detect whether or not a vial is present in each individual chamber within the array i.e. if all of the first receiving chambers contain a vial, then each of the optical sensors will detect a vial present. Only those second receiving chambers expected to receive a vial (following detection of a vial 100 within a corresponding first receiving chamber within the array at pick-up station 204) will be pressurized upon closure. Second receiving chambers that are not expected to have a vial present, because one was not detected within a first receiving chamber at a corresponding location within the array at pick-up station 204, will not be pressurized or measured. This reduces unnecessary energy consumption of pressurizing test chambers that do not contain a vial.

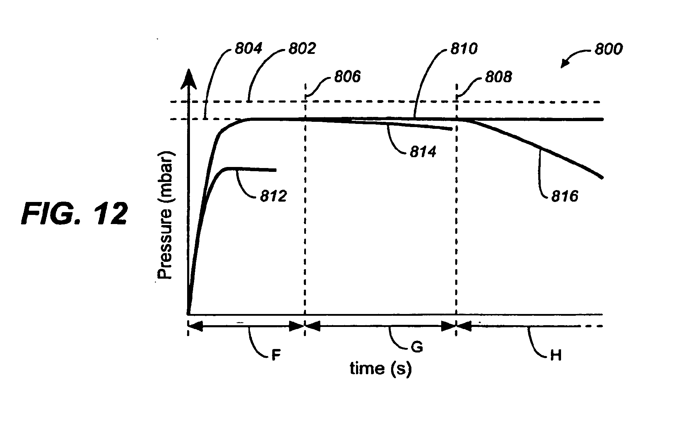

**Figure 12** shows an example pressure decay test result chart 800 showing changes in pressure over time according to the present invention, including a maximum pressure 802, a target pressure 804, a charge period 'F', a transition from the charging period to the measurement period 806, a gross leak measurement period 'G', a fine leak measurement period 'H', a transition from gross leak measurement to fine leak measurement 808, a non-leaking vial curve 810, a typical major defect curve 812, a gross leak curve 814 and a fine leak curve 816.

Optionally, in this invention positive air pressure decay testing is carried out. In essence, positive air pressure decay testing involves pressurizing the area surrounding the test item e.g. vial, and measuring any subsequent change in pressure that would indicate that air is escaping from or 'leaking' into the vial. Acceptable leakage rates for the vials being tested must first be determined, along with the time length of the test, from which the tolerance limits of the pressure decay test can be set.

In more detail, positive air pressure decay testing is based on the fundamental gas law $PV = nRT$ (where P is pressure, V is volume, n is the number of moles of air, R is the universal gas constant and T is temperature). Temperature is kept constant. The rate of air leaking into the vial is therefore determined by the change in volume per unit time. Typically, in a pressure decay test device, the change in pressure is measured by a pressure sensor and the change in volume is obtained using the fundamental gas law i.e. the change in volume can be determined if the change in pressure is measured, with knowledge of the number of moles of air held within each test part as well as knowledge of the ambient temperature of the system. The rate of air leaking into the vial is then calculated by dividing the change in volume by the test time. If a change in pressure greater than a predetermined value is measured within the test time, then this is indicative of an unacceptable leak and hence a failure of the vial integrity test.

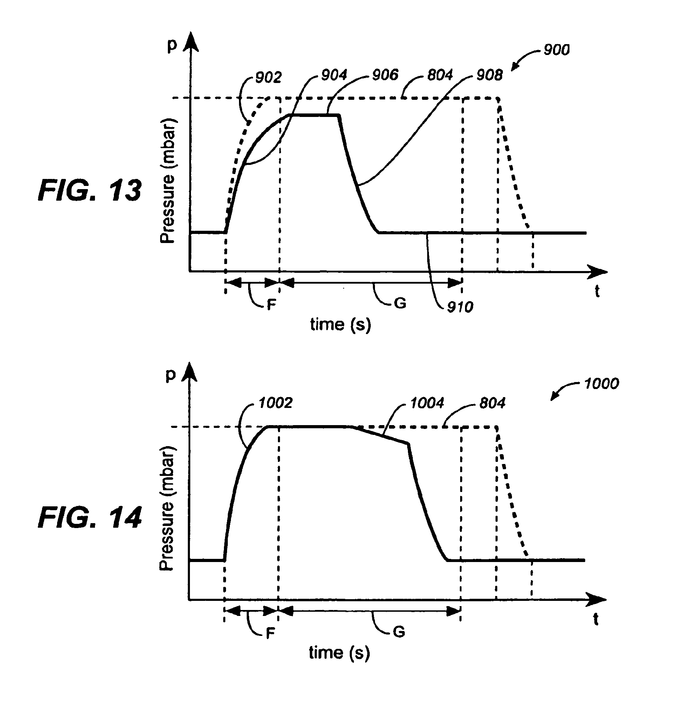

Referring now to Figure 12, each pressure test chamber containing a vial to be tested is closed and charged with pressurized air. Charging the chamber to a predetermined maximum pressure 802 consumes a certain period of time 'F' e.g. in the region of about 0.3 to 0.5 seconds. For the example test vial 100 provided in Figure 2, this maximum pressure may be in the range of about 300 to 350mbar, and may be closer to 320mbar. A target pressure 804 must also be predefined in order to determine whether a measured vial passes or fails the pressure decay test, as will be described in relation to Figures 13 and 14. In one embodiment, the target pressure may be in the range of about 290 to 310mbar, or more specifically 300mbar. Chambers containing a vial exhibiting a major defect 812, such as a test sensor trapped between vial body 102 and vial cap 104 for example may not reach the maximum pressure 802, or even the target pressure 804 for the reasons described above, a detailed example of which is shown and described in relation to Figure 13.

After initial charging, the pressurization stops and there is a transition 806 from the charging period 'F' to the measurement period 'G' and the measurement cycle begins. The measurement cycle will last for a predetermined length of time 'G', such as between about 1 and 3 seconds for example, after which the test is complete. The actual pressure at the end of time 'G' determines the difference in pressure with respect to the target pressure of say 300mbar, and determines whether a vial is kept or rejected.

In one embodiment, a vial that maintains a pressure of 300mbar or above for length of time 'G' is considered to be a 'non-leaker' 810 and will pass the test. The term 'non-leaker' is used for the purposes herein to describe a vial that passes a pressure decay test under certain predefined conditions as described. Ultimately any container will eventually 'leak' given enough time. It is therefore important that the parameters such as maximum and target pressures, and test times are first determined in order to provide a consistent and reliable pressure decay test. Parameters that define a 'good' vial from a 'bad' vial may be predetermined through accelerated ingress studies whereby acceptable rates of ambient air and light ingress into vials for use in the storage of test sensors are calculated. Product shelf-lifetimes and also in-use lifetimes (i.e. lifetime of test sensors after a vial has been opened) are determined from knowledge of such acceptable ingress rates.

If a vial 100 contains a major defect such as a trapped test sensor, broken or otherwise damaged rim of vial 100 or a moulding defect in vial 100, then in essence, the internal volume of vial 100 (item 'V1' in Figure 10) is added to the interstitial volume of the test chamber (item 'V2' in Figure 10) as there is no real barrier between. Thus, when chamber 600 is pressurized, the maximum pressure reached 812 will be lower than the predefined target pressure 804 (e.g. 300mbar) simply due to the fact that the volume has increased.

In one embodiment of the present invention, such a pressure decay test apparatus may be utilized to identify primarily gross leaks 814 i.e. a pressure decay below a target value 804 (e.g. 300mbar) within a certain period of measurement 'G' (e.g. 1 to 3 seconds). During this short test cycle the measurement result is purely quantitative i.e. a pass or fail depending on whether the pressure measured at the end of the predefined period is above or below a threshold value (300mbar in this example embodiment).

Optionally in a further embodiment, the duration of the pressure decay test cycle may be increased by period 'H', for example to 5 seconds, allowing the additional detection of finer leaks 816 i.e. smaller defects in the vial such as fine mould defects, anomalies or fine cracks. During this optional extended measurement period 'H', the measured rate of air pressure decay would be used to determine whether a particular vial passes or fails the test i.e. the actual rate of pressure decay over time. Calculation of acceptable parameters would be required in advance, and subsequently programmed into the running software of the pressure decay test device 200 in order to detect fine leaks 816. Vials that fail the pressure decay test due to a fine leak 816 may be rejected into a separate collection tray from those vials that failed due to a gross leak 814, or alternatively they may be rejected together.

Detecting only major defects 812 and gross leaks 814 enables a faster test procedure and therefore provides greater throughput of tested vials. The additional detection of finer leaks requires an increased test time 'H' and therefore reduces the machine throughput to a certain degree. The actual throughput of vials tested in a pressure decay test apparatus, such as the example apparatus provided in Figure 4, will be determined by the acceptance criteria for the level of air ingress into a vial used to store test sensors. Pressure decay testing of vials such as the example vial shown in Figure 2, using the parameters disclosed herein may generate a throughput of approximately 70 to 80 vials tested per minute. An increased throughput can however be achieved to meet the demand of a large scale high-speed production plant by operating multiple pressure decay test machines concurrently, or increasing the number of test chambers per machine so that a greater number of vials can be tested in a sub-batch, as would be apparent to a person skilled in the art.

Figure 13 is an example pressure decay test result obtained if a vial contains a major defect 900, such as a trapped sensor for example, including a target pressure 804, an expected rate of pressurization 902, an observed rate of pressurization 904, a period of pressurization 'F', a measurement period 'G', an observed maximum pressure achieved 906 and a drop in pressure 908 to a reduced level 910.

The pressure decay chart shown in Figure 13 is an example of the type of changes in pressure expected if a vial being tested contains a major gross defect such as a trapped sensor for example. Figure 13 includes a dashed line to represent the expected rate of pressurization 902 and target pressure 804. However, chambers containing a vial exhibiting a major defect, such as a trapped sensor for example will typically not reach the target pressure 804 for the reasons described above. The observed rate of pressurization 904 is lower than the expected rate of pressurization 902, and the maximum pressure achieved 906 is lower than the target pressure 804. During measurement period 'G' (e.g. 1 to 3 seconds) a substantial drop in pressure 908 to a reduced level 910 may be observed as the pressurized air moves into vial 100.

Unlike some alternative technologies, the apparatus of the invention has the advantage of being relatively insensitive to the position of a major defect e.g. to the position of a trapped test sensor caught somehow between the vial cap and vial body portions. A vial will be rejected if it fails the pressure decay test, regardless of position of a major defect.

**Figure 14** is a further example pressure decay test result showing an example of a vial exhibiting a gross leak 1000 including an expected rate of pressurization 1002, a target pressure 804 and a drop in pressure below the target level 1004.

Vials containing a gross leak, such as a broken or damaged rim or a mould defect for example will typically show a pressure decay chart such as the one provided in Figure 14. The initial rate of pressurization may be as expected 1002 and the target pressure 804 e.g. 300mbar may be reached in most examples. However, during the measurement period 'G' i.e. 1 to 3 seconds following pressurization, a drop in pressure 1004 below the target level 804 will be detected and the vial deemed for rejection. A change in pressure from a predetermined value i.e. below 300mbar in this example is indicative of an unacceptable leak in vial 100.

The pressure decay test results 900, 1000 provided in Figures 13 and 14 are provided by means of example only and it would be apparent to a person skilled in the art that different results would be observed corresponding to different types and degree of defect.

**Figure 15** shows a top plan view of a sorting array station 210 of the pressure decay test apparatus 200 of Figure 4 according to the present invention, including vial-receiving cavities 1102, optical sensors 214, vial retaining elements 1106 and operating electronics 1104. Vial retaining elements 1106 may each be operated independently under the control of operating electronics 1104 and 220 (see Figure 4).

Once the sub-batch of vials being tested is released from pressure decay test station 208, they are rotated around approximately 90° by rotary table 216 into alignment with sorting array station 210. The vials are then gripped and lifted by gripping elements 502 of Figures 7 and 8 and placed into the third receiving chambers 1102 of sorting array station 210. At sorting array station 210, a second group of optical sensors 214 check again the presence and/or absence of vials 100 (not shown) in sort array station 210, and a comparison is made against the initial presence and/or absence determination that was made at pick-up station 204. Information regarding the pass or fail status of each vial present is also communicated to sorting array station 210 by means of electronics 1104. Electronics 1104 ultimately trigger vial retaining elements 1106 to dispense each vial accordingly, based upon their result.

It is to be understood that first and third receiving chambers may be chambers, cavities or recesses for receiving vials 100. In one embodiment, vial retaining elements 1106 may be pneumatically operated, however it would be apparent to a person skilled in the art that other methods of activation is conceivable and not restricted by that described herein.

Optical sensors 214 located at each vial receiving cavity 1102 of sorting array station 210 verify that each vial 100 is either present or absent. If, at the start of the test i.e. at initial pick-up and orientation station 204, only 9 vials are picked up out of a possible 10 for example, then 9 vials should undergo the pressure decay test 208, and subsequently 9 vials should be delivered to sort array 210 to be separated between passed vials to be kept and failed vials to be discarded. If optical sensors 214 at sort array 210 detect any deviation from the number counted by first series of optical sensors 212 (located at pick-up station 204) i.e. the number of vials in the sub-batch leaving the machine is not equal to the number of vials in the sub-batch that entered the machine, then pressure decay test apparatus 200 would abort the test run and highlight the discrepancy to an operator. On resolution of the problem, the pressure decay test apparatus 200 would return to normal operation. Resolution of such a problem could involve re-testing of a number of vials to ensure 100% vial reconciliation.

**Figure 16** shows a flow diagram 1200 of the main process steps involved in the operation of the sort array 210 of Figure 15 according to the present invention including moving the vials into receiving chambers 1102 within sorting array station 210, step 1202, where optical sensors 214 again determine the presence and/or absence of each individual vial, step 1204. Next, any failed vials are rejected individually, step 1206 and counted as they pass into a reject collection tray, step 1208. The remaining passed i.e. good vials are then carefully dropped into a separate collection container, step 1210.

Referring now to Figures 15 and 16, all vials in each sub-batch being tested are initially held within third receiving chambers 1102 of sorting array station 210 by individual vial-retaining elements 1106, until the vials are ready to be dispensed from pressure testing apparatus 200. Once the pressure test results are communicated to sorting array station 210, any vial that failed the pressure decay test at pressure decay test station 208 is rejected from sorting array station 210 individually and sequentially by activation of the vial-retaining element 1106 in the respective cavity 1102. Each rejected vial is allowed to drop out of sorting array station 210 and into a rejected vial collection tray 222. As vials are rejected and fall into collection tray 222, an additional sensor such as an optical sensor for example may be triggered allowing each rejected vial to be counted. Counting of all rejected vials provides a further check that the number identified to have failed the pressure decay test is equal to the number counted upon rejection from sorting array station 210.

Information such as the total number of vials entering the pressure decay test machine, the total number of rejected vials, the number of gross leak failures and the number of fine leak failures (if measured) may be displayed to the operator during testing. Additional information such as batch lot number and mould identification parameters may also be displayed.

The provision of two sets of optical sensors, the first (item 212) located at pick-up station 204 and the second (item 214) located at sorting array station 210, ensures detailed reconciliation of numbers of vials passing through the pressure decay test apparatus 200. The optical sensors not only detect the number of vials 100 present, but also their respective positions determined at pick-up station 204.

Reconciliation of the number of vials 100 passing through the pressure decay test apparatus 200 according to the present invention is measured by more than one means: firstly, knowledge of the total count of vials entering the pressure decay apparatus ($N_{in}$) may be checked against the total number of vials exiting the apparatus ($N_{out}$), represented by;

$$N_{in} = N_{out}$$

Secondly, the number of vials in each sub-batch exiting the apparatus ($n_i^{out}$) may be checked against the number of vials in each sub-batch that entered ($n_i^{in}$) the apparatus, represented by;

$$n_i^{in} = n_i^{out}$$

where $n_i^{in}$ is in the range 0 to m vials (m being the maximum number of vials held in pick-up station 204) and m is typically equal to 10 vials in the example embodiment described herein.

A third level of reconciliation may be obtained by ensuring that the total number of vials counted in all sub-batches entering the apparatus is equal to the total number of vials present across all sub-batches exiting the apparatus. Assuming there are a total of p sub-batches, this may be represented by;

$$\sum_{i=1}^{p} n_i^{in} = \sum_{i=1}^{p} n_i^{out}$$

A further level of reconciliation may be provided by ensuring that the total number of vials counted within all sub-batches entering the apparatus, is equal to the total number of vials entering the apparatus (and the same check may be made for vials exiting the apparatus);

$$\sum_{i=1}^{p} n_i^{in} = N_{in}$$

A further level of reconciliation may be provided by ensuring that the number of vials known to have failed the pressure decay test $n_i^{fail}$ within each sub-batch i.e. the number of rejected vials expected, is equal to the number of vials actually rejected at sort array station 210;

$$n_i^{fail} = n_i^{rejected}$$

Alternatively or in addition, the total number of vials having failed the pressure decay test within 'p' sub-batches may be checked against the total number of vials rejected at sort array station 210;

$$\sum_{i=1}^{p} n_i^{fail} = \sum_{i=1}^{p} n_i^{rejected}$$

According to the present invention described herein, pressure decay test apparatus 200 may incorporate the second and third vial reconciliation checks described above. Alternative embodiments of a pressure decay test apparatus according to the present invention may however incorporate fewer or additional vial reconciliation checks, depending on the specific method of detection adopted.

If there is any deviation from the number expected then an alarm or other form of warning would be raised, testing halted and the operator informed. Possible causes for such a discrepancy may include an operator having removed a vial that was part-way through the pressure decay test apparatus 200, and therefore it was detected as being present at pick-up station 204 yet absent at sorting array station 210, or alternatively the unlikely event of a vial 100 being accidentally dropped by grippers 502 may have occurred. If any such instance was to occur, pressure decay test apparatus 200 may be arranged to stop operating and an error would be generated. Each vial 100 in the batch may require being retested to ensure that no sub-standard vials would pass in to the hands of a user.

Advantages of vial integrity testing using air pressure decay include the ability to detect gross defects such as trapped sensors as well as other problems such as broken or damaged rims or mould non-conformities.

Furthermore, the adoption of pressure decay test technology to test vial integrity has the advantage over other technologies in that it is insensitive to the position and/or orientation of a major defect such as a trapped sensor for example. Further still, the technique described herein is insensitive to any variability in the moulds used to manufacture the vials.

Parameters governing which vials are acceptable and which fail the pressure decay integrity test of the present invention are predetermined and first programmed into the pressure decay test device, allowing only those vials that do not meet the acceptability criteria to be rejected.

It is a further advantage of the present invention that several levels of vial reconciliation are made throughout the duration of the pressure decay test. This ensures reliable and consistent measurement of every vial within a batch, while providing the operator(s) with confidence that several independent reconciliation checks are made and a warning would be given if a nonconformity was identified.

It should be understood that various alternatives to the embodiments of the invention described herein may be employed in practicing the invention. It is intended that the following claims define the scope of the invention and that methods and structures within the scope of these claims and their equivalents be covered thereby.

**Claims**

1. An apparatus for testing the integrity of closed vials, each closed vial being adapted to contain at least one test sensor for testing for diabetes, the apparatus comprising;

   at least one sealable test chamber adapted to receive a closed vial, said sealable test chamber consisting of at least two parts moveable relative to one-another;

   a pick-up and placement station (206) for placing a closed vial into a sealable test chamber;

   a pressure decay test station (208) for moving the at least two parts of said sealable test chamber between an open position allowing the introduction and later removal of a closed vial, and a closed position providing an air-tight seal there between;

   the pressure decay test station comprising a mechanism for introducing gas into said test chamber for a first predetermined time period at a pressure sufficient to exceed a first threshold pressure for a closed vial of sound integrity, and a measurement mechanism for measuring the pressure of the gas within said sealable test chamber surrounding said closed vial at a first time point following the end of the first predetermined period of time;

   means for generating a signal indicative of an alarm if the pressure of gas measured within said sealable test chamber surrounding said closed vial at said first time point lies below a target pressure thereby indicating that the integrity of the closed vial may be compromised; **characterized by**:

   a vial pitck-up station (204) for picking up $n_i^{in}$ vials in an $i^{th}$ sub-batch on entry into the apparatus; wherein

   the pressure decay test station (208) is for testing the integrity of closed vials and determining the number of closed vials which fail the pressure test $n_i^{fall}$; and further comprising

   a vial sorting array station (210) for sorting vials between those which pass or fail the pressure test and counting $n_i^{rejected}$ vials on exit from the apparatus;

   and an alarm system for issuing an alarm when $n_i^{fall}$ is not equal to $n_i^{rejected}$.

2. An apparatus according to Claim 1, wherein;

   the vial pick-up station (204) is for picking up $n_i$ vials in an $i^{th}$ sub-batch over 'p' sub-batches on entry into the apparatus;

   the alarm system is for issuing an alarm when $\sum_{i=1}^{p} n_i^{rejected}$ is not equal to $\sum_{i=1}^{p} n_i^{fall}$.

3. An apparatus according to Claim 1, wherein the vial sorting array station is for counting $n_i^{out}$ vials on exit from the apparatus and the alarm system is for issuing an alarm when $n_i^{in}$ is not equal to $n_i^{out}$ in the $i^{th}$ sub-batch.

4. An apparatus according to Claim 1, wherein the vial pick-up station is for picking up $n_i^{in}$ vials in an $i^{th}$ sub-batch over p sub-batches entering into the apparatus, and the alarm system for issuing an alarm when $\sum_{i=1}^{p} n_i^{in}$ is not equal to $\sum_{i=1}^{p} n_i^{out}$.

5. An apparatus according to Claim 1, wherein the vial pick-up station is for picking up a total number of $N_m$, vials entering into the apparatus and for picking up $n_i^{in}$ vials in an $i^{th}$ sub-batch over p sub-batches entering into the apparatus, and the vial sorting array station is for counting $n_i^{out}$ vials on exit from the apparatus, and the alarm system is for issuing an alarm when $\sum_{i=1}^{p} n_i^{in}$ is not equal to the total number of vials $N_{in}$.

6. An apparatus according to Claim 1, wherein the vial pick-up station is for picking up a total number of $N_m$ vials entering into the apparatus, and the vial sorting array station is for counting a total number of vials

$N_{out}$ exiting the apparatus, and the alarm system is for issuing an alarm when $N_{in}$ is not equal to $N_{out}$.

7. An apparatus according to Claim 1, wherein there is a second predetermined time period separating the end of the first predetermined time period and a second time point and the measurement mechanism is for measuring the pressure of gas within said sealable test chamber surrounding said closed vial at said second time point, wherein the means for generating a signal indicative of an alarm is for generating a signal indicative of an alarm if the pressure of gas measured within said sealable test chamber surrounding said closed vial at said second time point lies below a target pressure thereby indicating that the integrity of the closed vial may be compromised, wherein the pressure measured at a first time point may be indicative of a gross leak and the pressure measured at a second time point may be indicative of a fine leak.

8. An apparatus according to Claim 7, wherein said first time point is in the range about 0.1 to 2 seconds following the end of the first predetermined time period.

9. An apparatus according to Claim 8, wherein said first time point is about 1 second following the end of the first predetermined time period.

10. An apparatus according to Claim 7, where the first threshold pressure lies in the range about 300 to 330mb.

11. An apparatus according to Claim 10, in which the first predetermined time period is about 0.1 to 2 seconds.

12. An apparatus according to Claim 11, in which the first predetermined time period is about 0.2 to 0.5 seconds.

13. An apparatus according to Claim 1, wherein the test chamber is sized and shaped to correspond to the size and shape of said closed vial so as to receive said closed vial in one orientation only.

14. An apparatus according to Claim 1, wherein the test chamber is sized and shaped to receive a closed vial received in any orientation.

15. An apparatus according to Claim 1, further comprising a gripping element for gripping closed vials to be tested comprising a lip and a recessed surface to reduce contact with labels affixed to said closed vials.

**Patentansprüche**

1. Vorrichtung zum Testen der Integrität von geschlossenen Fläschchen, wobei jedes geschlossene Fläschchen dazu ausgelegt ist, mindestens einen Testsensor zum Testen auf Diabetes zu enthalten, wobei die Vorrichtung Folgendes umfasst:

    mindestens eine abdichtbare Testkammer, die dazu ausgelegt ist, ein geschlossenes Fläschchen aufzunehmen, wobei die abdichtbare Testkammer aus mindestens zwei Teilen besteht, die relativ zueinander beweglich sind; eine Aufgreif- und Anordnungsstation (206) zum Anordnen eines geschlossenen Fläschchens in einer abdichtbaren Testkammer; eine Druckabfallteststation (208) zum Bewegen der mindestens zwei Teile der abdichtbaren Testkammer zwischen einer offenen Position, die die Einführung und die spätere Entnahme eines geschlossenen Fläschchens ermöglicht, und einer geschlossenen Position, die eine luftdichte Abdichtung dazwischen vorsieht; wobei die Druckabfallteststation einen Mechanismus zum Einführen von Gas in die Testkammer für eine erste vorbestimmte Zeitdauer mit einem Druck, der ausreicht, damit er einen ersten Schwellendruck für ein geschlossenes Fläschchen mit tadelloser Integrität überschreitet, und einen Messmechanismus zum Messen des Drucks des Gases innerhalb der abdichtbaren Testkammer, die das geschlossene Fläschchen umgibt, zu einem ersten Zeitpunkt nach dem Ende der ersten vorbestimmten Zeitdauer umfasst; ein Mittel zum Erzeugen eines Signals, das einen Alarm angibt, wenn der Druck des Gases, der innerhalb der abdichtbaren Testkammer, die das geschlossene Fläschchen umgibt, zum ersten Zeitpunkt gemessen wird, unter einem Zieldruck liegt, wodurch angegeben wird, dass die Integrität des geschlossenen Fläschchens beeinträchtigt sein kann; **gekennzeichnet durch**:

    eine Fläschchenaufgreifstation (204) zum Aufgreifen von $n_i^{in}$ Fläschchen in einer i-ten Teilcharge beim Eintritt in die Vorrichtung; wobei die Druckabfallteststation (208) zum Testen der Integrität von geschlossenen Fläschchen und Bestimmen der Anzahl von geschlossenen Fläschchen, die **durch** den Drucktest fallen, $n_i^{fail}$, dient; und ferner umfasst eine Fläschchensortieranordnungsstation (210) zum Sortieren von Fläschchen zwischen jenen, die den Drucktest bestehen oder **durch** diesen durchfallen, und zum

Zählen von $n_i^{rejected}$ Fläschchen beim Verlassen der Vorrichtung;
und ein Alarmsystem zum Ausgeben eines Alarms, wenn $n_i^{fail}$ nicht gleich $n_i^{rejected}$ ist.

2. Vorrichtung nach Anspruch 1, wobei:

die Fläschchenaufgreifstation (204) zum Aufgreifen von $n_i$ Fläschchen in einer i-ten Teilcharge über "p" Teilchargen beim Eintritt in die Vorrichtung dient;
das Alarmsystem zum Ausgeben eines Alarms dient, wenn $\sum_{i=1}^{p} n_i^{rejected}$ nicht gleich $\sum_{i=1}^{p} n_i^{fail}$ ist.

3. Vorrichtung nach Anspruch 1, wobei die Fläschchensortieranordnungsstation zum Zählen von $n_i^{out}$ Fläschchen beim Verlassen der Vorrichtung dient und das Alarmsystem zum Ausgeben eines Alarms dient, wenn $n_i^{in}$ nicht gleich $n_i^{out}$ in der i-ten Teilcharge ist.

4. Vorrichtung nach Anspruch 1, wobei die Fläschchenaufgreifstation zum Aufgreifen von $n_i^{in}$ Fläschchen in einer i-ten Teilcharge über p Teilchargen, die in die Vorrichtung eintreten, dient, und das Alarmsystem zum Ausgeben eines Alarms dient, wenn $\sum_{i=1}^{p} n_i^{in}$ nicht gleich $\sum_{i=1}^{p} n_i^{out}$ ist.

5. Vorrichtung nach Anspruch 1, wobei die Fläschchenaufgreifstation zum Aufgreifen einer Gesamtzahl von $N_{in}$ Fläschchen, die in die Vorrichtung eintreten, und zum Aufgreifen von $n_i^{in}$ Fläschchen in einer i-ten Teilcharge über p Teilchargen, die in die Vorrichtung eintreten, dient, und die Fläschchensortieranordnungsstation zum Zählen von $n_i^{out}$ Fläschchen beim Verlassen der Vorrichtung dient, und das Alarmsystem zum Ausgeben eines Alarms dient, wenn $\sum_{i=1}^{p} n_i^{in}$ nicht gleich der Gesamtzahl von Fläschchen $N_{in}$ ist.

6. Vorrichtung nach Anspruch 1, wobei die Fläschchenaufgreifstation zum Aufgreifen einer Gesamtzahl von $N_{in}$ Fläschchen, die in die Vorrichtung eintreten, dient, und die Fläschchensortieranordnungsstation zum Zählen einer Gesamtzahl von Fläschchen $N_{out}$, die die Vorrichtung verlassen, dient, und das Alarmsystem zum Ausgeben eines Alarms dient, wenn $N_{in}$ nicht gleich $N_{out}$ ist.

7. Vorrichtung nach Anspruch 1, wobei eine zweite vorbestimmte Zeitdauer besteht, die das Ende der ersten vorbestimmten Zeitdauer und einen zweiten Zeitpunkt trennt, und der Messmechanismus zum Messen des Drucks des Gases innerhalb der abdichtbaren Testkammer, die das geschlossene Fläschchen umgibt, zum zweiten Zeitpunkt dient, wobei das Mittel zum Erzeugen eines Signals, das einen Alarm angibt, zum Erzeugen eines Signals dient, das einen Alarm angibt, wenn der Druck des Gases, der innerhalb der abdichtbaren Testkammer, die das geschlossene Fläschchen umgibt, zum zweiten Zeitpunkt gemessen wird, unter einem Zieldruck liegt, wodurch angegeben wird, dass die Integrität des geschlossenen Fläschchens beeinträchtigt sein kann, wobei der zu einem ersten Zeitpunkt gemessene Druck auf ein grobes Leck hindeuten kann und der zu einem zweiten Zeitpunkt gemessene Druck auf ein feines Leck hindeuten kann.

8. Vorrichtung nach Anspruch 7, wobei der erste Zeitpunkt im Bereich von etwa 0,1 bis 2 Sekunden nach dem Ende der ersten vorbestimmten Zeitdauer liegt.

9. Vorrichtung nach Anspruch 8, wobei der erste Zeitpunkt etwa 1 Sekunde nach dem Ende der ersten vorbestimmten Zeitdauer liegt.

10. Vorrichtung nach Anspruch 7, wobei der erste Schwellendruck im Bereich von etwa 300 bis 330 mb liegt.

11. Vorrichtung nach Anspruch 10, wobei die erste vorbestimmte Zeitdauer etwa 0,1 bis 2 Sekunden ist.

12. Vorrichtung nach Anspruch 11, wobei die erste vorbestimmte Zeitdauer etwa 0,2 bis 0,5 Sekunden ist.

13. Vorrichtung nach Anspruch 1, wobei die Testkammer so bemessen und geformt ist, dass sie der Größe und Form des geschlossenen Fläschchens entspricht, um das geschlossene Fläschchen in nur einer Orientierung aufzunehmen.

14. Vorrichtung nach Anspruch 1, wobei die Testkammer bemessen und geformt ist, um ein geschlossenes Fläschchen aufzunehmen, das in irgendeiner Orientierung aufgenommen wird.

15. Vorrichtung nach Anspruch 1, die ferner ein Greifelement zum Greifen von zu testenden geschlossenen Fläschchen mit einer Lippe und einer vertieften Oberfläche umfasst, um den Kontakt mit Etiketten, die an den geschlossenen Fläschchen befestigt sind, zu verringern.

**Revendications**

1. Appareil de test de l'intégrité de fioles fermées, chaque fiole fermée étant prévue pour contenir au moins un détecteur de test destiné au dépistage du diabète, l'appareil comportant :

au moins une chambre de test scellable et prévue pour recevoir une fiole fermée, ladite chambre de test scellable étant constituée d'au moins deux parties mobiles l'une par rapport à l'autre ; un poste (206) de collecte et de mise en place servant à placer une fiole fermée dans une chambre de test scellable ;

un poste (208) de test de baisse de pression servant à déplacer lesdites au moins deux parties de ladite chambre de test scellable entre une position ouverte, permettant l'introduction et le retrait ultérieur d'une fiole fermée, et une position fermée créant un joint étanche à l'air entre celles-ci ;

le poste de test de baisse de pression comportant un mécanisme servant à introduire du gaz dans ladite chambre de test pendant une première durée prédéterminée à une pression suffisante pour dépasser une première pression seuil pour une fiole fermée d'intégrité correcte, et un mécanisme de mesure servant à mesurer la pression du gaz à l'intérieur de ladite chambre de test scellable entourant ladite fiole fermée à un premier instant suivant la fin de la première durée prédéterminée ;

un moyen servant à générer un signal indicatif d'une alarme si la pression de gaz mesurée à l'intérieur de ladite chambre de test scellable entourant ladite fiole fermée audit premier instant se situe au-dessous d'une pression visée, indiquant ainsi que l'intégrité de la fiole fermée pourrait être compromise, **caractérisé par** :

un poste (204) de collecte de fioles servant à collecter $n_i^{in}$ fioles d'un $i^{ème}$ sous-lot à leur entrée dans l'appareil ;

le poste (208) de test de baisse de pression servant à tester l'intégrité de fioles fermées et à déterminer le nombre de fioles fermées qui échouent au test de pression, $n_i^{fail}$; et comportant en outre un poste (210) d'alignement de tri des fioles, servant à trier les fioles entre celles qui réussissent et qui échouent au test de pression, et à compter $n_i^{rejected}$ fioles à la sortie de l'appareil ;

et un système d'alarme servant à émettre une alarme lorsque $n_i^{fail}$ n'est pas égal à $n_i^{rejected}$.

2. Appareil selon la revendication 1;
le poste (204) de collecte de fioles servant à collecter $n_i^{in}$ fioles d'un $i^{ème}$ sous-lot sur p sous-lots à leur entrée dans l'appareil ;

le système d'alarme servant à émettre une alarme lorsque $\sum_{i=1}^{p} n_i^{rejected}$ n'est pas égal à $\sum_{i=1}^{p} n_i^{fail}$.

3. Appareil selon la revendication 1, le poste d'alignement de tri des fioles servant à compter $n_i^{out}$ fioles à la sortie de l'appareil et le système d'alarme servant à émettre une alarme lorsque $n_i^{in}$ n'est pas égal à $n_i^{out}$ dans le $i^{ème}$ sous-lot.

4. Appareil selon la revendication 1, le poste de collecte de fioles servant à collecter $n_i^{in}$ fioles d'un $i^{ème}$ sous-lot sur p sous-lots entrant dans l'appareil et le système d'alarme servant à émettre une alarme lorsque

$$\sum_{i=1}^{p} n_i^{in} \text{ n'est pas égal à } \sum_{i=1}^{p} n_i^{out}.$$

5. Appareil selon la revendication 1, le poste de collecte de fioles servant à collecter un nombre total $N_{in}$ de fioles entrant dans l'appareil et à collecter $n_i^{in}$ fioles d'un $i^{ème}$ sous-lot sur p sous-lots entrant dans l'appareil, le poste d'alignement de tri des fioles servant à compter $n_i^{out}$ fioles à la sortie de l'appareil et le système d'alarme servant à émettre une alarme lorsque $\sum_{i=1}^{p} n_i^{in}$ n'est pas égal au nombre total $N_{in}$ de fioles.

6. Appareil selon la revendication 1, le poste de collecte de fioles servant à collecter un nombre total $N_{in}$ de fioles entrant dans l'appareil et le poste d'alignement de tri des fioles servant à compter un nombre total $N_{out}$ de fioles sortant de l'appareil, et le système d'alarme servant à émettre une alarme lorsque $N_{in}$ n'est pas égal à $N_{out}$.

7. Appareil selon la revendication 1, **caractérisé par** une deuxième durée prédéterminée séparant la fin de la première durée prédéterminée d'un deuxième instant et le mécanisme de mesure servant à mesurer la pression du gaz à l'intérieur de ladite chambre de test scellable entourant ladite fiole fermée audit deuxième instant, le moyen de génération de signal indicatif d'une alarme servant à générer un signal indicatif d'une alarme si la pression de gaz mesurée à l'intérieur de ladite chambre de test scellable entourant ladite fiole fermée audit deuxième instant se situe au-dessous d'une pression visée, indiquant ainsi que l'intégrité de la fiole fermée pourrait être compromise, la pression mesurée audit premier instant pouvant être indicative d'une fuite majeure et la pression mesurée audit deuxième instant pouvant être indicative d'une fuite mineure.

8. Appareil selon la revendication 7, ledit premier instant se situant dans un intervalle d'environ 0,1 à 2 secondes après la fin de la première durée prédéterminée.

9. Appareil selon la revendication 8, ledit premier instant se situant environ 1 seconde après la fin de la première durée prédéterminée.

10. Appareil selon la revendication 7, la première pression seuil se situant dans un intervalle d'environ 300 à 330 mb.

11. Appareil selon la revendication 10, la première durée prédéterminée étant d'environ 0,1 à 2 secondes.

12. Appareil selon la revendication 11, la première durée prédéterminée étant d'environ 0,2 à 0,5 seconde.

13. Appareil selon la revendication 1, la chambre de test présentant des dimensions et une forme de nature à correspondre aux dimensions et à la forme de ladite fiole fermée de façon à recevoir ladite fiole fermée dans une seule orientation.

14. Appareil selon la revendication 1, la chambre de test présentant des dimensions et une forme de nature à recevoir une fiole fermée logée dans une orientation quelconque.

15. Appareil selon la revendication 1, comportant en outre un élément de préhension servant à saisir des fioles fermées à tester, comportant un rebord et une surface en retrait afin de réduire le contact avec des étiquettes apposées sur lesdites fioles fermées.

Test sensors manufactured
using either flat-bed or
web printing technology — 2

↓

Cards of test sensors
cut into individual — 4
test sensors

Option 1 — 6
Integrity of vial may be
tested using pressure
decay leak testing prior
to being filled with one
or more test sensors

→

↓

Single or multiple
test sensors are — 8
placed into vials

Option 2
Integrity of vial may be
tested using pressure
decay leak testing prior
to insertion within
secondary packaging
— 10

→

↓

Vials are optionally — 12
placed into
secondary packaging

←

Option 3 — 14
Integrity of vial may be
tested using pressure
decay leak testing during
secondary packaging
process e.g. boxing

**FIG. 1**

FIG. 2

FIG. 3

200

202

Vials are Fed into
the apparatus

204

206

216

218

Vial pick-up
and optional
orientation station

212

Vials (e.g. 10)
are picked &
placed into
open chambers

Vials are Fed into
the apparatus

202

Empty test
chambers return
to pick-up station

Pressure
decay test
station

214

Vials e.g. 10
are picked &
placed into
Sorting array

208

210

220

Failed vials are
rejected individually
and counted

222

Rejected vials

Passed vials
are collected
and stored

224

Passed vials

**FIG. 4**

_300_

Vial feeding _302_

↓

Vial pick-up &
optional orientation _304_

↓

Optical sensors detect
presence / absence
of vials after pick-up _306_

↓

Pick and place on
rotary table _308_

↓

Pressure decay
test (see Fig. 11) _310_

↓

Pick and place
to sort array _312_

↓

Optical sensors verify
presence or absence
of vials in sort array _314_

↓

_316_ Container Storage ← Pass — Vials are sorted (see Fig. 15) _315_ — Fail → Reject tray _318_

**FIG. 5**

**FIG. 6**

**FIG. 7**

FIG. 8

**FIG. 9**

606

602

610  608

618  612  600

604

100

**V1**

615

614

**FIG. 10**

606  608  602

600

610,618

100

**V1**

604

615

**V2**

*700*

```
     ┌─────────────────────┐   ┌ 702
     │   Vials placed into │ ┌/
     │    test chambers    │/
     └─────────────────────┘
               │
               ▼
     ┌─────────────────────┐   ┌ 704
     │ Test chambers sealed│ ┌/
     └─────────────────────┘/
               │
               ▼
   ┌───────────────────────┐   ┌ 706
   │ Pressure in chambers  │ ┌/
   │ raised to a predefined│/
   │       maximum         │
   └───────────────────────┘
               │
               ▼
   ┌───────────────────────┐   ┌ 708
   │ Pressurization stopped│ ┌/
   └───────────────────────┘/
               │
               ▼
   ┌───────────────────────┐   ┌ 710
   │   Pressure decay over │ ┌/
   │     time measured     │/
   └───────────────────────┘
               │
               ▼
   ┌───────────────────────┐   ┌ 712
   │    Test complete after│ ┌/
   │ predetermined period  │/
   │       of time         │
   └───────────────────────┘
               │
               ▼
   ┌───────────────────────┐   ┌ 714
   │ Data for each test    │ ┌/
   │ chamber stored in     │/
   │       memory          │
   └───────────────────────┘
               │
               ▼
   ┌───────────────────────┐   ┌ 716
   │   Pressure released   │ ┌/
   │ and test chambers     │/
   │        opened         │
   └───────────────────────┘
               │
               ▼
   ┌───────────────────────┐   ┌ 718
   │ Vials removed from    │ ┌/
   │ test chambers and taken│/
   │ to sort array (Fig. 15)│
   └───────────────────────┘
```

## FIG. 11

FIG. 12

FIG. 13

FIG. 14

**FIG. 15**

1200

Vials moved to sort array ⟋ 1202

⟶

Optical sensors re-confirm ⟋ 1204
presence +/or absence of vials

⟶

Failed vials are ⟋ 1206
rejected individually

⟶

All failed vials are counted as they ⟋ 1208
pass into a reject collection tray

⟶

All passed vials are ⟋ 1210
dispensed simultaneously
to a separate container

## FIG. 16

**EP 1 906 164 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 3402940 A1
- CH 685887